(19) Europäisches Patentamt / European Patent Office / Office européen des brevets

(11) **EP 3 447 354 A1**

(12) **EUROPEAN PATENT APPLICATION**

(43) Date of publication:
27.02.2019 Bulletin 2019/09

(51) Int Cl.:
*F16L 27/08* (2006.01)   *B64D 13/06* (2006.01)

(21) Application number: 17382577.9

(22) Date of filing: 21.08.2017

| | |
|---|---|
| (84) Designated Contracting States:<br>AL AT BE BG CH CY CZ DE DK EE ES FI FR GB<br>GR HR HU IE IS IT LI LT LU LV MC MK MT NL NO<br>PL PT RO RS SE SI SK SM TR<br>Designated Extension States:<br>**BA ME**<br>Designated Validation States:<br>**MA MD** | (71) Applicant: **Airbus Operations, S.L.**<br>**28906 Getafe (Madrid) (ES)**<br><br>(72) Inventor: **LENOIR, Brice Bernard Michel**<br>**GETAFE (Madrid) (ES)**<br><br>(74) Representative: **Herrero & Asociados, S.L.**<br>**Cedaceros, 1**<br>**28014 Madrid (ES)** |

(54) **ANGULAR ADJUSTMENT COUPLING FOR CONNECTING TWO PIPES OF AN AIRCRAFT**

(57)   The invention refers to an angular adjustment coupling (1) for connecting two pipes (10a, 10b) of an aircraft (12), comprising at least two rings (2) having a ramp cross-section to provide thinner and wider sides (2', 2"), and at least three clamps (3), one clamp (3) disposed between the two rings (2) to fasten one to another at a selectable angular position, and the other two clamps (3) to be disposed between each one of the rings (2) and the pipes (10a, 10b), wherein the two rings (2) have substantially the same ramp cross-section, so that the angular position is selectable between a minimum angular position in which the wider sides (2") of the rings (2) are arranged at diametrically opposite positions, and a maximum angular position in which the wider sides (2") of the rings (2) are arranged at diametrically coincident positions.

FIG.6b

## Description

### Object of the invention

The present invention refers to a new angular adjustment coupling for connecting a pair of pipes of an aircraft, to be mainly used in the pneumatic system of an aircraft.

More in particular, it is an object of the invention to provide an angular adjustment coupling that minimizes the weight and cost involved by couplings conventionally used for connecting pipes to each other to form aircraft ducts.

Another object of the invention is to provide an angular adjustment coupling that eases the installation and maintenance tasks of the ducts running along the aircraft.

### Background of the invention

In an aircraft, several ducts are formed of pipes connected two-by-two by connectors fixed to the structure of the aircraft. Some of these ducts are used for pneumatics.

As known, the pneumatic system of an aircraft includes bleed air ducts running along the wings and fuselage to drive hot air from the engines and APU (Auxiliary Power Unit) to the air conditioning packs.

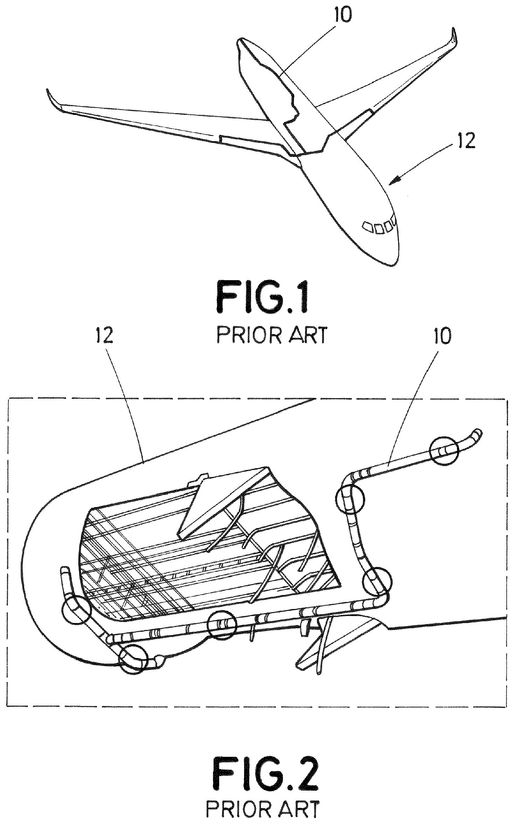

Figure 1 shows a schematic view of an aircraft (12) equipped with the above mentioned bleed air ducts (10) running along thereof.

Conventionally, as showed in the detailed view of Figure 2, these bleed air ducts (10) are made of pipes clamped to each other.

These pipes are traditionally made of insulated titanium. As these pipes are rigid, they require the use of flexible or adjustable couplings to compensate the tolerance of the parts (ducts and structural brackets). These couplings provide the needed angles, which are typically fairly small (few degrees), due to the large routing covered by these pipes.

Nowadays, there are two types of couplings capable of providing an angular adjustment between different pipes: flexible couplings and adjustable couplings.

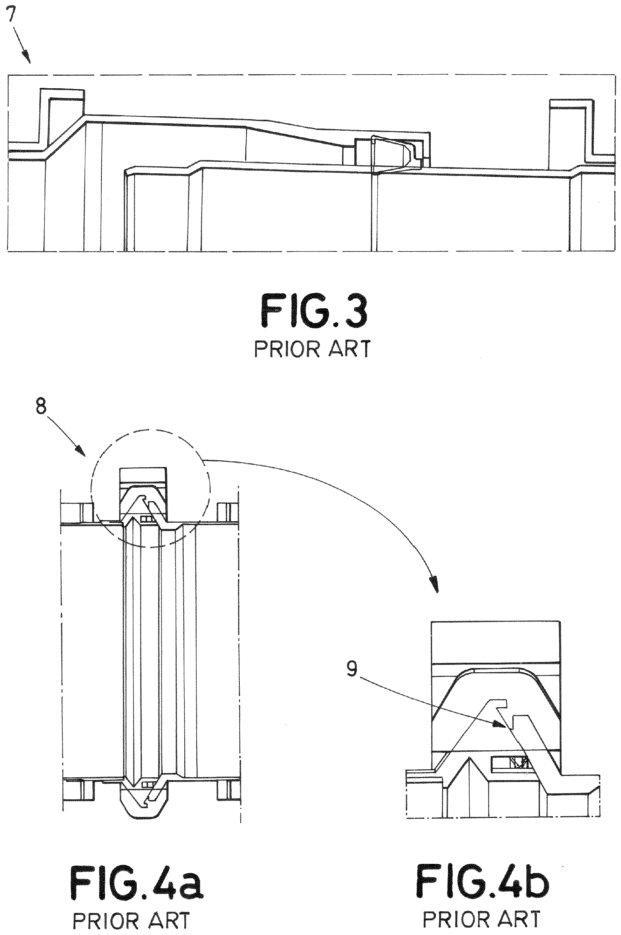

Flexible couplings are typically used to compensate for deformation in flight (such as thermal expansion), or decouple loads on some axes. These couplings leave several degrees of freedom even after installation. Figure 3 shows a detailed view of a flexible coupling (7).

In contrast, adjustable couplings stay fixed after installation and carry loads in flight. These couplings are typically used to provide tight connections while allowing tolerances being adjusted at installation.

Figure 4 shows a detailed view of an adjustable coupling (8), specifically a self-aligning duct joint. As shown, the coupling (8) provides a spherical contact surface (9), which allows the coupling to be set at an angle before clamping. After tightening, the coupling (8) transmits loads on all axes, and the connection is fixed. Further, a metallic seal ensures airtightness.

As mentioned, adjustable couplings provide tight and safe connections between pipes of the pneumatic system of an aircraft. However, these kind of couplings are heavy, due to their section size (one 6.5" (16.51cm) connection may weight about 1.55kg) and costly (in the order of magnitude of 1500€ per connection), since the machining is difficult to realize.

It would therefore be desirable to provide technical means that reduce the weight and cost of the adjustable couplings while simplifying their machining.

### Summary of the invention

The present invention overcomes the above mentioned drawbacks by providing an angular adjustment coupling that is lighter, cheaper and easier to produce than the angular adjustment coupling traditionally used for connecting pipes of an aircraft.

One aspect of the present invention refers to an angular adjustment coupling for connecting two pipes of an aircraft that comprises at least two rings having a ramp cross-section to provide thinner and wider sides, and at least three clamps, one clamp disposed between the two rings to fasten one to another at a selectable angular position, and the other two clamps to be disposed between each one of the rings and the pipes to connect said pipes together. The two rings have substantially the same ramp cross-section, so that the angular position is selectable between a minimum angular position in which the wider sides of the rings are arranged at diametrically opposite positions, and a maximum angular position in which the wider sides of the rings are arranged at diametrically coincident positions.

Thus, the invention offers a new angular adjustment coupling with a simplified design that allows providing different angular positions on the connection of two pipes. The invention drastically reduces the complexity, weight and cost of the traditionally used angular adjustment couplings, by only requiring the use of two ramp rings and three clamps to connect the elements among them. The desired angular positions have to be manually adjusted at installation, unlike the known self-aligning coupling joints, which adjusts itself during connection.

Further, this angular adjustment coupling provides an easy angle setting that facilitates adjustment and measurement with precision.

Another aspect of the invention refers to a duct for an aircraft that comprises two pipes, and an angular adjustment coupling as described above and arranged between said two pipes to connect one to another at a selectable angular position.

The duct of the invention provides adjustable couplings that allow compensating for tolerance, at the same time that weight, cost and complexity are reduced compared to traditional ducts equipped with traditional couplings.

## Brief description of the drawings

For a better comprehension of the invention, the following drawings are provided for illustrative and non-limiting purposes, wherein:

Figure 1 shows a schematic view of an aircraft equipped with bleed air ducts running along the wings and fuselage.

Figure 2 shows a detailed view of Figure 1 in which bleed air duct sections clamped to each other are illustrated.

Figure 3 shows a detailed view of a flexible coupling of the state of the art.

Figure 4 shows a detailed view of an adjustable coupling of the state of the art.

Figure 5 shows a schematic lateral view (drawing A and drawing B) and perspective view (drawing C) of different ring arrangements of an angular adjustment coupling, according to a preferred embodiment of the present invention. Drawing A shows a ring arrangement setting a minimum angular position between the pipes. Drawing B shows a ring arrangement setting a maximum angular position between the pipes. Drawing C shows a ring arrangement setting an intermediate angular position between the pipes.

Figure 6 shows a perspective view (drawing A) and a lateral view (drawing B) of a prototype of an angular adjustment coupling, according to a preferred embodiment of the present invention.

Figure 7 shows a schematic frontal view of the angular adjustment coupling set on a minimum angular position (drawing A) and on a maximum angular position (drawing B).

Figure 8 shows representative views of directions and values resulting from different angular positions of the rings of the angular adjustment coupling. Drawing A shows a maximum setting angle value. Drawing B and drawing C show intermediate setting angle values. Drawing D shows a minimum setting angle value.

## Preferred embodiment of the invention

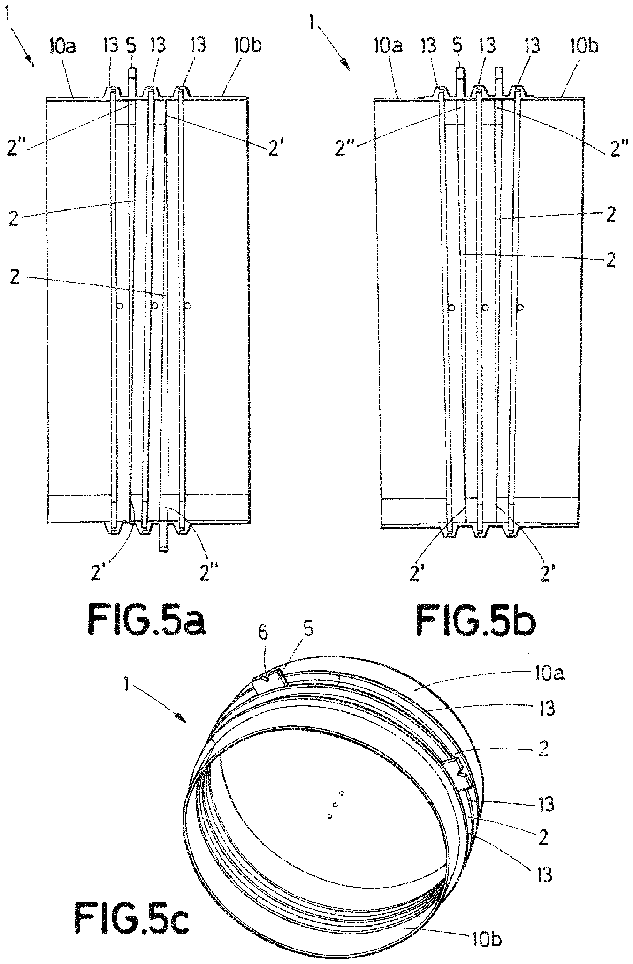

Figures 5a, 5b and 5c show an angular adjustment coupling (1) according to a preferred embodiment. According to the invention, the angular adjustment coupling (1) for connecting two pipes (10a, 10b) for an aircraft (12) comprises two rings (2) having a ramp cross-section (angled rings) to provide thinner (2') and wider sides (2"), and three clamps (3). As shown, two clamps (3) are arranged between each one of the pipes (10a, 10b) and each one of the rings (2), and the other clamp (3) is arranged between the two rings (2).

The variable cross-section of the rings (2) enables to provide a selectable angular position between them, and transferred this angular position (angular variation) to the pipes (10a, 10b) when they are connected.

Figure 5a shows the rings (2) of the angular adjustment coupling (1) arranged for setting a minimum angular difference between the pipes (10a, 10b). This minimum angular difference is established by a minimum angular position in which the wider sides (2") of the rings (2) are arranged at diametrically opposite positions.

Figure 5b shows the rings (2) of the angular adjustment coupling (1) arranged for setting a maximum angular difference between the pipes (10a, 10b). This maximum angular difference is established by a maximum angular position in which the wider sides (2") of the rings (2) are arranged at diametrically coincident positions.

Figure 5c shows the rings (2) of the angular adjustment coupling (1) arranged for setting an intermediate angular difference between the pipes (10a, 10b). This intermediate angular difference is established by an intermediate angular position in which the wider sides (2") of the rings are arranged between diametrically opposite and diametrically coincident positions.

Figures 5a, 5b and 5c further show the intersections (13) between the pipes (10a, 10b) and/or the rings (2) in which the clamps (3) would be arranged.

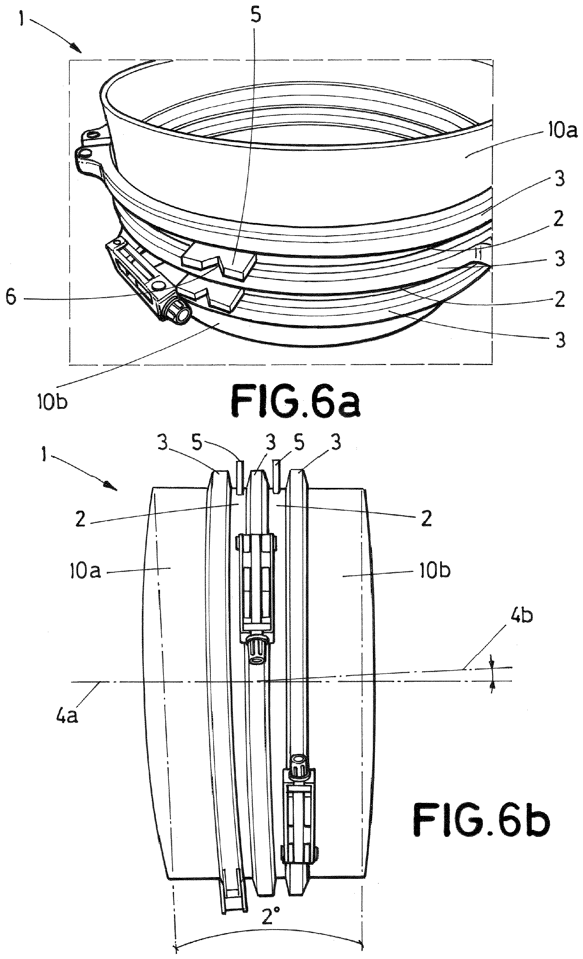

Figures 6a and 6b show a perspective and a lateral view of a prototype of an angular adjustment coupling (1).

As shown in Figures 6a and 6b, and according to a preferred embodiment, at least one of the clamps (3) consists of a V-clamp. This kind of clamps provides a simple and cost-effective connection.

According to another preferred embodiment, the wider sides (2") of the rings (2) have a lateral protrusion (5) to be visually identified. This way, the desired angle will be easily set at installation, since this desired value is very small (around 1 to 4 degrees) and thus very difficult to identify.

Preferentially, and as shown in Figures 6a and 6b, each lateral protrusion (5) has a notch (6) at the widest side (2") of the ring (2) to identify the maximum angular deviation.

Figures 6a and 6b show an angular adjustment coupling (1) in which a maximum angular position of 2 geometric degrees is established. This maximum angular position establishes up to 4 geometric degrees of difference between the longitudinal axes (4a, 4b) of the two pipes (10a, 10b). In contrast, if a minimum angular position would be established, a zero-degree coupling would be provided, and the longitudinal axes (4a, 4b) of the two pipes (10a, 10b) would be coincident.

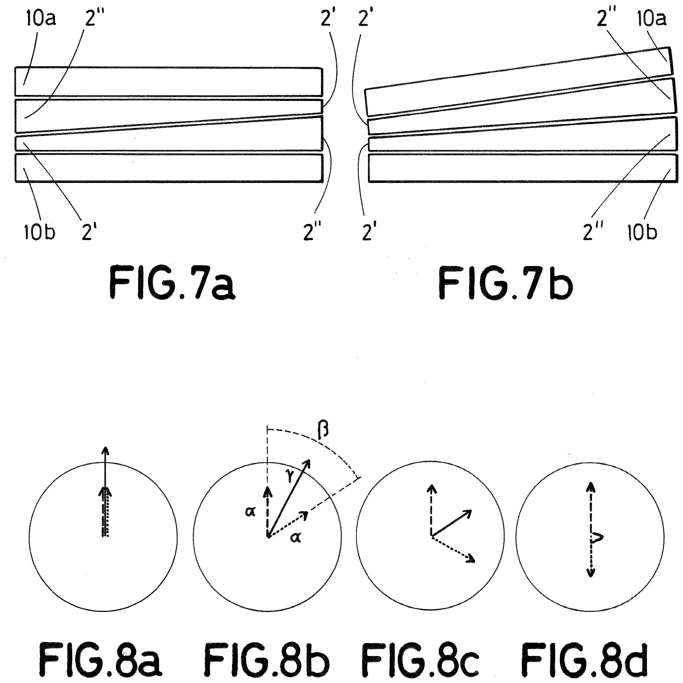

Figure 7 shows a schematic front view of an angular adjustment coupling (1) set on a minimum angular position (Figure 7a) and on a maximum angular position (Figure 7b).

Figure 8a-8d schematically show different views of directions and values resulting from different radial positions of the rings of the angular adjustment coupling.

Figure 8a shows the maximum value of the resultant setting angle, in which the widest sides of both rings are oriented towards the same direction.

Figure 8b and 8c show intermediate values of the resultant setting angle, in which both rings are oriented towards different directions, excluding coincident (showed in Figure 8a) and opposite (showed in Figure 8d).

The setting angle between the pipes can be set in any direction, and at any angle between 0° (minimum setting angle value) and two times the geometric angle of the rings. The geometric angle of the rings is the angle defined by their ramp, that is, between their thinner and wider sides. The geometric angle of the rings is set by their machining, and can be chosen freely for the amount of adjustment needed.

Calling the ring geometric angle "$\alpha$", and the radial angle between the rings "$\beta$", the setting angle "$\gamma$" will be:

$$\gamma = 2\alpha * \cos(\beta/2)$$

The direction of the setting angle of the angular adjustment coupling is the middle (the average) of the setting directions of both rings.

Figure 8d finally shows the minimum value of the resultant setting angle, in which the widest sides of both rings are oriented away from each other (in opposite directions).

The invention finally refers to a duct (10) for an aircraft (12) that comprises two pipes (10a, 10b), and an angular adjustment coupling (1) as described above and arranged between said two pipes (10a, 10b) to connect one pipe to another at a selectable angular position.

The duct has a lower weight, cost and complexity in comparison with traditional ducts equipped with traditional couplings. Further, the duct allows compensating for tolerance in the coupling of the sections.

**Claims**

1. Angular adjustment coupling (1) for connecting two pipes (10a, 10b) of an aircraft (12) comprising:

   - at least two rings (2) having a ramp cross-section to provide thinner and wider sides (2', 2"), and
   - at least three clamps (3), one clamp (3) disposed between the two rings (2) to fasten one to another at a selectable angular position, and the other two clamps (3) to be disposed between each one of the rings (2) and the pipes (10a, 10b) to connect said pipes together,
   - wherein the two rings (2) have substantially the same ramp cross-section, so that the angular position is selectable between a minimum angular position in which the wider sides (2") of the rings (2) are arranged at diametrically opposite positions, and a maximum angular position in which the wider sides (2") of the rings (2) are arranged at diametrically coincident positions.

2. Angular adjustment coupling (1) for connecting two pipes (10a, 10b) of an aircraft (12), according to claim 1, wherein the minimum angular position corresponds to a zero-degree coupling in which the longitudinal axes (4a, 4b) of the two pipes (10a, 10b) are coincident.

3. Angular adjustment coupling (1) for connecting two pipes (10a, 10b) of an aircraft (12), according to any preceding claims, wherein the maximum angular position ranges from 1 to 4 geometric degrees of difference between the longitudinal axes (4a, 4b) of the two pipes (10a, 10b).

4. Angular adjustment coupling (1) for connecting two pipes (10a, 10b) of an aircraft (12), according to any preceding claims, wherein the wider sides (2") of the rings (2) have a lateral protrusion (5) to be visually identified.

5. Angular adjustment coupling (1) for connecting two pipes (10a, 10b) of an aircraft (12), according to claim 4, wherein the lateral protrusion (5) has a notch (6) at the widest side (2") of the ring (2).

6. Angular adjustment coupling (1) for connecting two pipes (10a, 10b) of an aircraft (12), according to any preceding claims, wherein at least one of the clamps (3) consists of a V-clamp.

7. A duct (10) for an aircraft (12) comprising two pipes (10a, 10b), and an angular adjustment coupling (1) according to any of claims 1-6 arranged between said two pipes (10a, 10b) to connect one pipe to another at a selectable angular position.

10

12

# FIG.1
PRIOR ART

12

10

# FIG.2
PRIOR ART

# FIG.3
PRIOR ART

# FIG.4a
PRIOR ART

# FIG.4b
PRIOR ART

FIG.5a

FIG.5b

FIG.5c

**FIG.6a**

**FIG.6b**

10a  2"  2'  2'  2"  10a

10b  2'  2"  2'  2"  10b

# FIG.7a    FIG.7b

β

γ

α

α

# FIG.8a  FIG.8b  FIG.8c  FIG.8d

# EUROPEAN SEARCH REPORT

Europäisches Patentamt
European Patent Office
Office européen des brevets

Application Number

EP 17 38 2577

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2008 030195 A1 (EHRENLEITNER FRANZ [DE]) 5 February 2009 (2009-02-05) * figures 1-8, 10-11 * | 1-7 | INV. F16L27/08 B64D13/06 |
| X | WO 2008/152643 A2 (KRAUSZ IND DEV LTD [IL]; KRAUSZ ELIEZER [IL]; CHIPROOT AVI [IL]) 18 December 2008 (2008-12-18) * figures 2,4 * | 1-7 | |
| X | JP 2002 195472 A (ON IND LTD) 10 July 2002 (2002-07-10) * figures 1-5 * | 1-7 | |
| A | FR 737 761 A (ALBERT LECQ) 16 December 1932 (1932-12-16) * figures 1,2 * | 1-7 | |
| A | US 776 971 A (WALSH JOHN D [US]) 6 December 1904 (1904-12-06) * figures 2-5 * | 1-7 | |

TECHNICAL FIELDS SEARCHED (IPC)

F16L
B64D

The present search report has been drawn up for all claims

| Place of search | Date of completion of the search | Examiner |
|---|---|---|
| Munich | 2 November 2017 | Cetiner-Fresneda, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 38 2577

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2017

| Patent document cited in search report | Publication date | Patent family member(s) | Publication date |
|---|---|---|---|
| DE 102008030195 A1 | 05-02-2009 | AT 505609 A1<br>DE 102008030195 A1 | 15-02-2009<br>05-02-2009 |
| WO 2008152643 A2 | 18-12-2008 | EP 2165109 A2<br>IL 183868 A<br>RU 2009148237 A<br>US 2010171303 A1<br>WO 2008152643 A2 | 24-03-2010<br>31-08-2011<br>20-07-2011<br>08-07-2010<br>18-12-2008 |
| JP 2002195472 A | 10-07-2002 | NONE | |
| FR 737761 A | 16-12-1932 | NONE | |
| US 776971 A | 06-12-1904 | NONE | |

EPO FORM P0459

For more details about this annex : see Official Journal of the European Patent Office, No. 12/82